# EUROPEAN PATENT APPLICATION

(11) **EP 1 338 981 A2**
(43) Date of publication of application: **27.08.2003**
(21) Application number: 02257062.6
(22) Date of filing: 11.10.2002
(51) Int. Cl.: G06F 17/30

(54) **Information processing apparatus capable of storing a photograph in an address book together with other information**

(30) Priority: 21.02.2002 JP 2002044864
(71) Applicant: FUJITSU LIMITED, Kawasaki-shi, Kanagawa 211-8588 (JP)
(72) Inventor: Suzuki, N., c/o Fujitsu Hyper Software Tech. Ltd., Yokohama-shi, Kanagawa 222-0033 (JP); Nanba, M., c/o Fujitsu Hyper Software Tech. Ltd., Yokohama-shi, Kanagawa 222-0033 (JP); Abe, H., c/o Fujitsu Hyper Software Tech. Ltd., Yokohama-shi, Kanagawa 222-0033 (JP); Suzuki, Makoto, c/o Fujitsu Limited, Kawasaki-shi, Kanagawa 211-8588 (JP); Yoshihara, K., c/o Fujitsu Hyper Software Tech Ltd, Yokohama-shi, Kanagawa 222-0033 (JP)
(74) Representative: Hitching, Peter Matthew

(57) **Abstract**

An information processing apparatus is disclosed which is capable of storing in an address book a photograph of the face of a person listed in the address book, together with data such as the name and address of that listed person. A real time image of the listed person being captured by a camera is displayed in an area (3) provided to display the photograph of the face of the listed person. The real time image is stored as a still image, which is entered as the photograph of the face of the listed person into the address book together with the data concerning the listed person.

## Description

The present invention relates to an information processing apparatus capable of storing in an address book a photograph such as a photograph of the face of a person listed in the address book, together with the name, telephone number, mail address, and other information identifying that listed person.

Portable wireless communication apparatuses, or portable telephones, are widely known as information processing apparatuses having address books. Some of recently introduced apparatuses are equipped with a function that enables a photograph of the face of a person listed in an address book to be added to the address book together with the name, telephone number, mail address, and other information identifying that listed person. Adding a photograph of the face to such identifying information can help to visually identify the person.

To add information, including a face photograph, to an address book, first an address book entry mode is set, and the name, telephone number, mail address, and other information identifying a person are entered at positions displayed as blank spaces on the display screen by operating numeric keys and other input means.

Then, the mode is switched from the address book entry mode to a photograph shooting mode, to take a photograph of the face that can visually identify that person. This is done by using a camera built in the portable telephone if it is equipped with such a camera, or by connecting an external camera to the portable telephone if it is not equipped with a built-in camera. The photograph of the face thus taken is stored as an image in memory.

Next, using the edit function of the address book, the photograph retrieved from the memory is pasted into a photograph pasting area which is displayed on the display screen along with the person identifying information.

In the above prior art example, there has been a problem in terms of operability since the mode has to be switched from the address book entry mode to the photograph shooting mode and the photograph has to be pasted thereafter.

In another prior art example which solves the above problem, if an optional camera unit is connected to an information processing apparatus such as a notebook computer, a photograph shooting application is automatically started when adding a new entry for a person to the address book so that the photograph taken by the camera unit can be pasted into the photograph pasting area, while allowing the user to enter the name, telephone number, and mail address of that person.

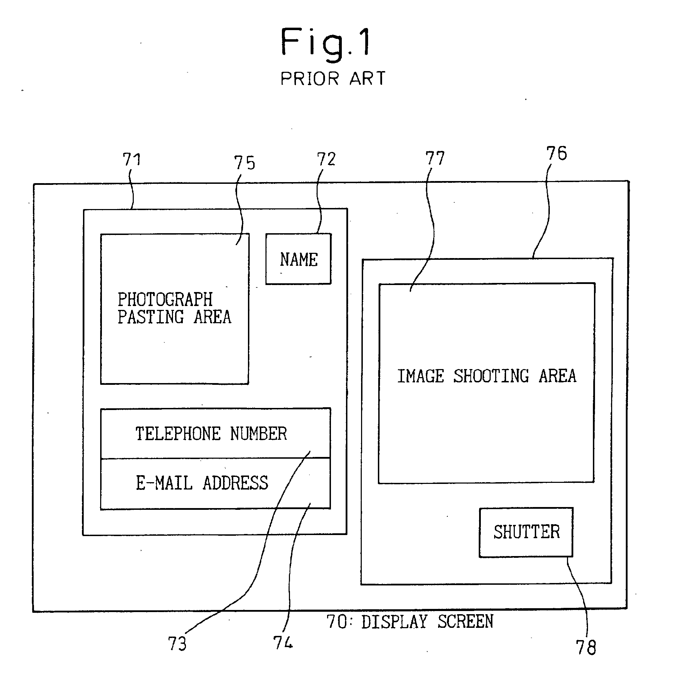

Figure 1 shows the prior art in which the address book entry operation and the photograph shooting operation are performed in interlinking fashion. Reference numeral 70 is a display screen which is the display screen of a liquid crystal display that can be opened and closed on a notebook computer. Two windows, an address book window 71 and a photograph shooting window 76, are displayed on the display screen 70.

The address book window 71 includes a name field 72, a telephone number field 73, and an E-mail address field 74. Though not shown here, it. also includes other fields such as a group name field. The photograph of the person whose name is entered in the name field 72 is pasted into the photograph pasting area 75.

On the other hand, the photograph shooting window 76 includes an image shooting area 77 which displays an image being shot by the camera. When taking a photograph, this shooting area functions as a finder. The operator can take a photograph by pressing a shutter icon in the photograph shooting window 76 while watching the image shooting area. The photograph thus taken is immediately pasted into the photograph pasting area within the address book window 71.

In this prior art example, however, as the two windows, i.e., the address book window having the photograph pasting area and the photograph shooting window having the image shooting area, are displayed on the display screen, the image being photographed cannot be displayed at a sufficiently large size.

If the windows are displayed by switching from one to the other or in overlapping fashion, since only one window is displayed, for example, over the entire screen, the image being photographed can be displayed at a sufficiently large size, but in that case, operability degrades because the operator cannot operate the apparatus while checking the image against the name and other information identifying the listed person.

In particular, in the case of a portable wireless communication apparatus such as a portable telephone whose input keys are small, operability greatly degrades if the window switching operation has to be done frequently by using such small input keys.

Furthermore, as the display screen itself is small, it is not possible, in reality, to display two windows simultaneously and display in one of the windows an image that can visually identify the person.

Accordingly, it is desirable to be able to enter person identifying information into an photograph attached address book while displaying an image as large as possible without sacrificing operability.

According to an aspect of the present invention there is provided an information processing apparatus comprising: a display section which displays an address book having person identifying information identifying a person listed therein and a photograph pasting area into which a photograph taken by shooting the listed person is pasted; an input section for inputting at least the person identifying information; a camera for taking the photograph of the listed person; and a controller for performing control to display in the photograph pasting area an image captured by the camera.

More specifically, in the present invention, the photograph pasting area is also used as an image shooting area, i.e., the finder, and when taking a photograph, the apparatus is operated by making effective use of the photograph pasting area that also functions as the finder.

Preferred features of the present invention will now be described, purely by way of example, with reference to the accompanying drawings, in which:
Figure 1 is a diagram showing the prior art;
Figure 2 is a diagram showing one example of a screen when referring to an address book according to one embodiment of the present invention;
Figure 3 is a diagram showing one example of a screen when adding a new entry to the address book according to the one embodiment of the present invention;
Figure 4 is a perspective view of a portable telephone as one example of an information processing apparatus to which the present invention can be applied;
Figure 5 is a perspective view of a notebook computer as another example of the information processing apparatus to which the present invention can be applied;
Figure 6 is a block diagram schematically showing the hardware configuration of the information processing apparatus to which the present invention can be applied;
Figure 7 is a flowchart illustrating an address book entry operation according to one embodiment of the present invention; and
Figure 8 is a diagram showing an example of the display screen during the address book entry operation.

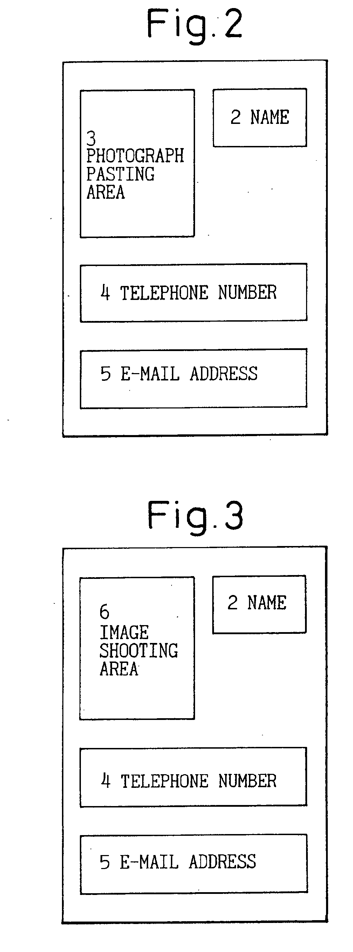

Figures 2 and 3 are diagrams showing an embodiment of the present invention. In the figures, reference numeral 1 is a display screen, and a name field 2, a photograph pasting area 3, a telephone number field 4, and an E-mail address field 5 are shown on the display screen 1. Other fields, such as a group name field, that can be set as desired are also included, though not shown here.

Figure 2 shows the display screen when referring to the address book, while Figure 3 shows the display screen when adding a new entry to the address book. An image shooting area 6 shown on the display screen when adding a new entry is the same area that is used as the photograph pasting area 3 when referring to the address book in Figure 2. In this way, the image pasting area within the display screen is also used as the image shooting area.

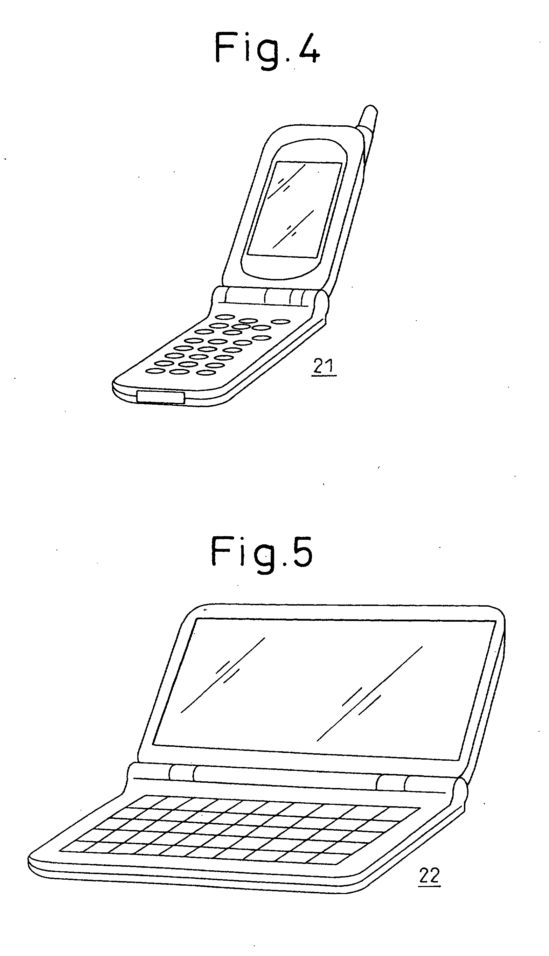

Figures 4 and 5 are diagrams each showing an example of an information processing apparatus to which the present invention can be applied. In Figure 4, reference numeral 21 is a portable telephone, and in Figure 5, reference numeral 22 is a notebook computer. While the portable telephone shown as an example in Figure 4 is of a folding type, the invention is equally applicable to a rod type or so-called straight type portable telephone.

The personal computer in Figure 5 is shown as being a notebook computer designed for the convenience of portability, but the personal computer may be a desktop computer designed to sit on a desk. The invention is also applicable to personal digital assistants (PDAs).

That is, the present invention can be applied to any type of information processing apparatus as long as it comprises a display section and an input section and has an address book creation capability and a photograph shooting capability regardless of whether the camera used is a built-in type or an external type.

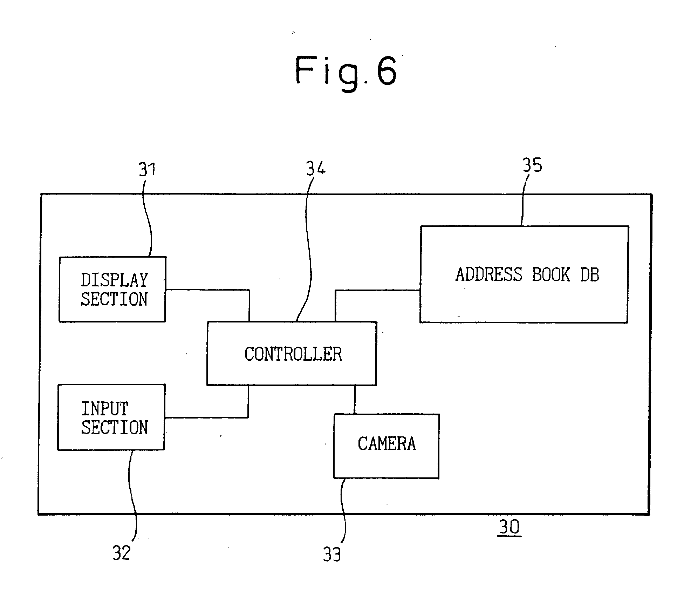

One example of the hardware configuration of the information processing apparatus to which the present invention can be applied will be described with reference to Figure 6. The information processing apparatus 30 comprises a display section 31, on which is displayed an address book having person identifying information identifying a person listed therein and a photograph pasting area into which a photograph of the listed person is pasted, and an input section 32, which is used to input the person identifying information.

Also included are a camera 33 for taking a photograph of the listed person, an address book DB 35 for storing information entered into the address book, and a controller 34 for controlling the various operations performed by the display section 31, the input section 32, the camera 33, and the address book DB 35. The control to display an image captured by the camera 33 in the photograph pasting area is performed by this controller 34.

If the information processing apparatus 30 is a portable wireless communication apparatus such as a portable telephone, the apparatus further includes a wireless communication unit for transmitting and receiving information such as voice or mail via a communication network, plus an antenna, a microphone, a speaker, an auxiliary display, and an incoming call indicator such as a light-emitting diode.

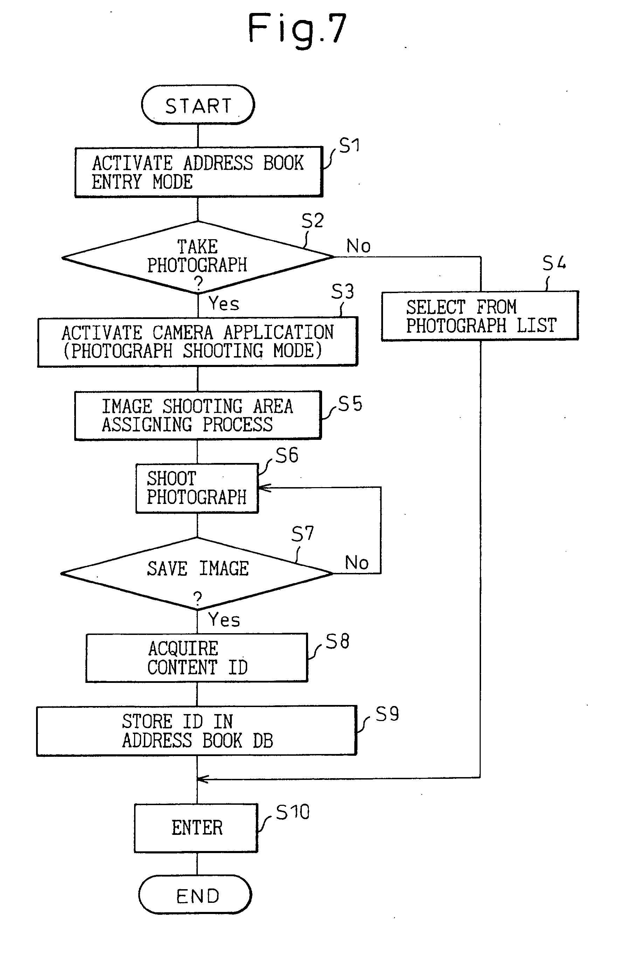

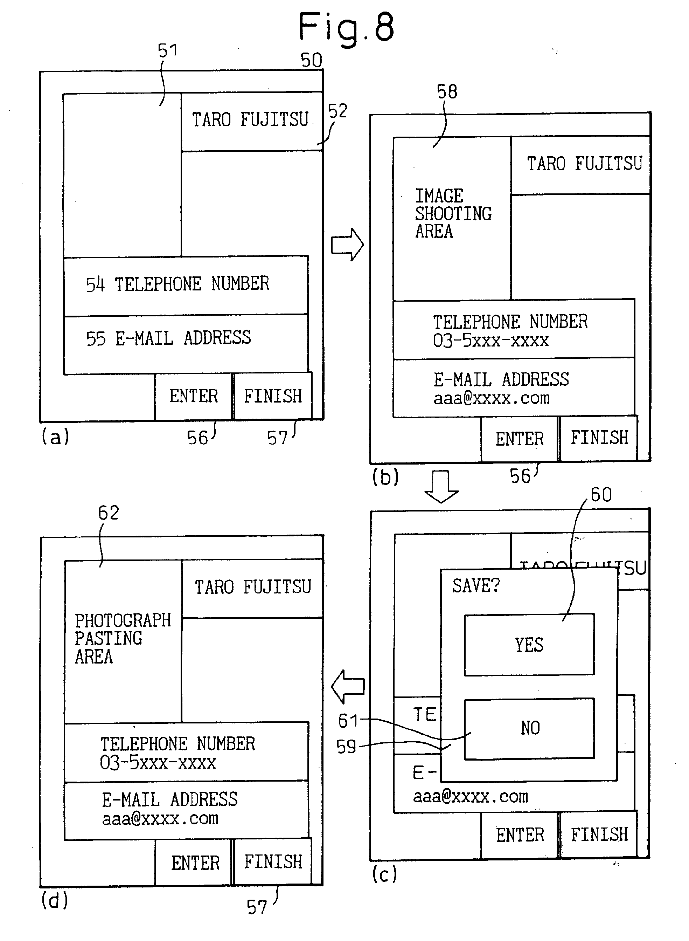

A specific example illustrating how a new entry is added to a photograph attached address book according to the present invention will be described in detail with reference to the flowchart of Figure 7 and the screen display example of Figure 8. The following description is given by taking a portable telephone with a built-in camera as an example of the information processing apparatus.

A menu screen or the like on the portable telephone is operated to enter an address book entry mode (S1 in Figure 7). The display screen in the address book entry mode is shown in Figure 8(a). An area 51, which is used as both an area for displaying a photograph pasted therein, such as a photograph of the face of a person, and an image shooting area for displaying an image being captured by the camera, is displayed on the display screen 50 of Figure 8(a) along with the listed person's name field 52, the listed person's telephone number field 54, and the listed person's mail address field 55. An enter button 56 for determining the entry of each item and a finish button 57 for completing the address book entry operation are also displayed.

In Figure 7, the process proceeds to S2 to determine whether a photograph is to be taken or not, and if a new photograph is to be taken here, a camera application is activated in S3 in Figure 7. The determination in S2 in Figure 7 is made by the portable telephone user selecting the desired button from the select button displayed on the display screen.

On the other hand, if a photograph previously taken and stored in memory is to be pasted into the photograph pasting area of the address book, the process proceeds to S4 in Figure 7 to select the desired image data from a list of photographs. After the selection is made, the selected image data is pasted as a photograph into the photograph pasting area to complete the entry operation.

When the camera application is activated, the image shooting area assigning process shown in S5 in Figure 7 is carried out under the control of the controller 34 so that the area 51 shown in Figure 8(a), which is the photograph pasting area when referring to the address book, is assigned to the image shooting area 58 as shown in Figure 8(b).

Figure 8(b) shows the display screen when the camera application is activated. The image being captured by the camera, for example, a moving image, is displayed in the image shooting area 58. Figure 8(b) shows the display on which the telephone number and E-mail address of the listed person are already entered in the respective fields. After the telephone number and E-mail address are entered, the enter button 56 is pressed to issue an instruction signal to determine the respective entries.

As the image being captured by the camera is displayed in the image shooting area 58, it can be said that this area functions as a finder. The portable telephone user presses a pushbutton type shutter to take a photograph (S6 in Figure 7), and the photographed image is displayed as a still image in the image shooting area 58.

The portable telephone user determines whether to save or not save the photographed still image (S7 in Figure 7). For example, a save window 59 is displayed with a Yes button 60 and a No button 61, as shown in Figure 8(c), prompting the user to select the desired button. When the No button 61 is selected, the process returns to the photograph shooting step S6 in Figure 7, and is repeated until a desired image is obtained.

When the Yes button is selected, that is, when the user desires to save the image, a photograph ID which serves as the content ID of the image is acquired (S8 in Figure 7), and the ID is stored in the address book DB together with the listed person's name and other identifying information by associating the photograph ID with the information identifying the listed person (S9 in Figure 7).

The display screen after selecting the Yes button 60 is as shown in Figure 8(d), and the image shooting area 58 is now displayed as the photograph pasting area 62 with the photographed image pasted therein as a photograph. When the finish button 57 is finally pressed, the address book entry process is terminated (S10 in Figure 7), and the photograph attached address book is now ready for use.

In the above embodiment, the information processing apparatus has been described as being a portable telephone having a built-in camera, but there will be no problem if the camera is external to the portable telephone. When the invention is applied to a portable telephone having a small display screen, a greatly enhance visual effect is achieved because data can be displayed during image shooting in the largest possible display area and without impairing the operability.

As described above, according to the present invention, as the photograph pasting area within the display screen is also used as an image shooting area, i.e., the finder, an image can be displayed in the largest possible display screen if the display screen size is not large, and operation can be performed while checking the image against the listed person identifying information. In particular, the effect is most apparent when the invention is applied to a portable wireless communication apparatus, or a portable telephone, which generally has a small display screen and has somewhat inferior operability when it comes to inputting data because of its small input keys.

## Claims

1. An information processing apparatus comprising:
a display section displaying on the same screen a data display area for displaying data concerning a listed person and an image display area for displaying a first image of the listed person; and
a controller displaying a second image of the listed person in real time in the image display area, and storing the second image being displayed in real time as the first image to enable the first image to be displayed together with the data concerning the listed person on the same screen.

2. An information processing apparatus according to claim 1, further comprising a camera for acquiring a real time image of the listed person.

3. An information processing apparatus according to claim 1 or 2, wherein the information processing apparatus is of a portable type.

4. A program storage device readable by a machine, tangibly embodying a program of instructions executable by the machine to perform method steps comprising:
displaying on the same screen a data display area for displaying data concerning a listed person and an image display area for displaying a first image of a listed person;
displaying a second image of the listed person in real time in the image display area; and
storing the second image being displayed in real time as the first image to enable the first image to be displayed together with the data concerning the listed person on the same screen.

5. A method of operating an information processing apparatus comprising the steps of:
displaying on the same screen a data display area for displaying data concerning a listed person and an image display area for displaying a first image of the listed person;
displaying a second image of the listed person in real time in the image display area; and
storing the second image being displayed in real time as the first image to enable the first image to be displayed together with the data concerning the listed person on the same screen.

6. A program of instructions which, when executed on a machine, cause it to carry out the steps of claim 5.
